# EUROPÄISCHE PATENTSCHRIFT

(11) **EP 3 997 018 B1**
(45) Veröffentlichungstag und Bekanntmachung des Hinweises auf die Patenterteilung: **07.08.2024**
(21) Anmeldenummer: 20736575.0
(22) Anmeldetag: 29.06.2020
(51) Int. Cl.: B65G 23/22

(54) **FÖRDERVORRICHTUNG MIT EINEM ELEKTROMOTOR**
CONVEYOR HAVING AN ELECTRIC MOTOR
DISPOSITIF DE TRANSPORT POURVU D'UN MOTEUR ÉLECTRIQUE

(30) Priorität: 11.07.2019 US 201962872931 P; 22.07.2019 DE 102019005068
(43) Veröffentlichungstag der Anmeldung: 18.05.2022
(73) Patentinhaber: SEW-EURODRIVE GmbH & Co. KG, 76646 Bruchsal (DE)
(72) Erfinder: BLICKE, Rainer, 29365 Lyman (US)
(86) Internationale Anmeldenummer: PCT/EP2020/025305
(87) Internationale Veröffentlichungsnummer: WO 2021/004656

(56) Entgegenhaltungen:
- EP-A1- 2 562 102
- US-A1- 2017 267 459

## Beschreibung

Die Erfindung betrifft eine Fördervorrichtung mit einem Elektromotor.

Es ist allgemein bekannt, dass Fließbänder von Getriebemotoren angetrieben werden.

Aus der DE 10 2015 210 641 A1 ist ein Elektromotor bekannt.

Aus der US 2004 / 0 035 684 A1 ist eine Rollen-Fördervorrichtung bekannt.

Aus der DE 10 2010 051 192 A1 ist ein Herstellverfahren für eine Fördervorrichtung, aufweisend ein auf einer Welle drehfest verbundenes Zahnrad, bekannt, dessen Verzahnung mit der Verzahnung eines anderen Zahnrades im Eingriff ist zur Förderung von Fördermittel zwischen einem ersten Kanalbereich und einem zweiten Kanalbereich.

**Aus der** US 2017/267459 A1 **ist** eine Fördervorrichtung nach dem Oberbegriff des Anspruchs 1

### Aus der EP 2 562 102 A1 ist eine Bandförderanlage bekannt.

Der Erfindung liegt daher die Aufgabe zugrunde, eine Fördervorrichtung kostengünstig betreibbar weiterzubilden.

Erfindungsgemäß wird die Aufgabe bei der Fördervorrichtung nach den in Anspruch 1 angegebenen Merkmalen gelöst.

Wichtige Merkmale der Erfindung bei der Fördervorrichtung mit einem Elektromotor sind, dass der Elektromotor ein Statorgehäuse und einen Rotor aufweist,
wobei der Rotor drehfest mit einer Hohlwelle verbunden ist, welche relativ zum Statorgehäuse drehbar gelagert ist,
insbesondere wobei die Hohlwelle mittels eines ersten Lagers, das in einem Lagerflansch aufgenommen ist und mit dem Statorgehäuse verbunden ist, und mittels eines zweiten Lagers gelagert ist, das in einem zweiten Lagerflansch aufgenommen ist und mit dem Statorgehäuse auf der von dem ersten Lagerflansch abgewandten Seite des Statorgehäuses verbunden ist,
wobei die Hohlwelle drehfest, insbesondere kraftschlüssig, mit einer Vollwelle verbunden ist, welche zumindest teilweise in eine Ausnehmung der Hohlwelle hineinragt,
wobei das Statorgehäuse, insbesondere der erste, mit dem Statorgehäuse verbundene Lagerflansch, mit einem Flansch verbunden ist, welcher auf der vom Elektromotor abgewandten Seite mit einem zweiten Tragteil verbunden ist,
wobei die Vollwelle durch eine Ausnehmung des zweiten Tragteils hindurchragt und in einem in einem ersten Tragteil aufgenommenen ersten Lager drehbar gelagert ist,
wobei die Vollwelle mit einem Fördermittel, insbesondere Rolle oder Zahnrad, drehfest verbunden ist,
wobei das Fördermittel zwischen dem ersten und dem zweiten Tragteil angeordnet ist,
wobei der Flansch mittels durch Ausnehmungen des Flansches hindurchragender Schraubteile, insbesondere mittels durch Ausnehmungen des Flansches hindurchragende Gewindestangen oder mittels durch Ausnehmungen des Flansches hindurchragende Schraubenköpfe aufweisende Schrauben mit dem zweiten Tragteil verbunden ist,
wobei jedes Schraubteil vom Flansch beabstandet ist und das jeweilige Schraubteil durch ein jeweiliges Federteil hindurchragt, das zwischen dem jeweiligen Schraubteil und dem Flansch angeordnet ist,
insbesondere wobei das jeweilige Federteil in eine axial durch den Flansch durchgehende Ausnehmung eingesteckt ist.

Von Vorteil ist dabei, dass der Elektromotor direkt an das Tragteil anbaubar ist und von diesem gehalten ist. Somit ist die Hohlwelle mit der anzutreibenden Vollwelle der Fördervorrichtung direkt verbindbar, also ohne zwischengeordnetes Getriebe. Auf diese Weise ist also ein Getriebe einsparbar und somit ein kostengünstiges Betreiben der Fördervorrichtung, insbesondere mit geringeren Verlustenergieen, ermöglicht.

Um ein genügend großes Drehmoment zu erzeugen, muss der Elektromotor allerdings als Synchronmotor ausgeführt sein. Das Anlaufmoment einer Fördervorrichtung ist hoch, da die Vollwelle über eine Rolle ein Band antreibt oder über ein Zahnrad eine Förderkette und sowohl Band als auch Kette gespannt sind. Daher sind hohe Reibungskräfte bewirkt, also ein hohes Anlaufmoment vom Motor aufzubringen.

Durch den direkten Anbau des Elektromotors über den Flansch am zweiten Tragteil ist auch Wärme ans Tragteil abführbar.

Die Federteile ermöglichen, dass nach dem Verbinden der Vollwelle mit der Hohlwelle der Flansch mit dem zweiten Tragteil verbindbar ist und somit eine Ausrichtung des Flansches zur

Drehachse ermöglicht ist. Wenn also die Drehachse der Hohlwelle etwas verschoben ist, ist der Flansch ebenfalls verschiebbar, wobei allerdings die Federteile bei zunehmender Verschiebung eine zunehmende Gegenkraft erzeugen. Auf diese Weise ist eine Verschiebung des Flansches ermöglicht, aber auch bei zu großer Verschiebung eine rückstellende Kraftwirkung. Die Federteile bewirken also im Gegensatz zu einer Ausführung ohne die Federteile, dass bei Fertigungstoleranzbedingten Abweichungen der Drehachse der Vollwelle und/oder Hohlwelle von ihrer Idealposition, eine gewisse restliche Spannung im System bleibt, was ein loses Spiel verhindert. Beispielsweise werden auch die Lager mit dieser restlichen Spannung beaufschlagt und die Teile des Systems elastisch ausgelenkt. Insgesamt handelt es sich hier um kleine restliche Spannung, die somit vom System aufnehmbar sind. Vorzugsweise wird also der Flansch aus einem weicheren Material als das zweite Tragteil gefertigt. Auf diese Weise nimmt auch der Flansch selbst einen Anteil der restlichen Spannung auf.

Im Betrieb auftretenden mechanische Schwingungen bewirken wegen der restlichen Spannung des Systems somit auch geringere Amplituden.

Bei einer vorteilhaften Ausgestaltung ist im ersten Tragteil ein zweites Lager zur drehbaren Lagerung der Vollwelle angeordnet. Von Vorteil ist dabei, dass die Vollwelle beidseitig lagerbar ist. Denn einerseits ist sie im zweiten Lager und andererseits über die Hohlwelle in den Lagern des Motors gelagert.

Bei einer vorteilhaften Ausgestaltung ist das Federteil aus einem elastischen Material, insbesondere aus einem Elastomer und/oder aus Gummi, gefertigt ist und/oder ringförmig ausgebildet,
insbesondere wobei das Federteil einen in Umfangsrichtung um die Ringachse des ringförmig ausgebildeten Federteils umlaufenden, radial hervorragender Kragen aufweist, insbesondere welcher das Federteil in axialer Richtung am Flansch begrenzt. Von Vorteil ist dabei, dass die rückstellende Kraft nur gering ist und somit zwar eventuell vorhandenes Spiel im System überwunden ist, aber keine hohe Spannbelastung ins System eingebracht wird.

Bei einer vorteilhaften Ausgestaltung ist der Flansch aus einem Material, einstückig und/oder einteilig, hergestellt, dessen Elastizitätsmodul größer ist als das Elastizitätsmodul des zweiten Tragteils. Von Vorteil ist dabei, dass ein Teil der Restspannung im Flansch aufnehmbar ist, insbesondere durch elastisches Verspannen.

Bei einer vorteilhaften Ausgestaltung weist die Hohlwelle eine mittig angeordnete, sacklochartig ausgeführte Ausnehmung auf oder weist eine axial durch die Hohlwelle durchgehende Bohrung auf. Von Vorteil ist dabei, dass die Vollwelle einsteckbar ist in die Hohlwelle, wobei ein Klemmring auf die Hohlwelle aufgeschoben ist, welcher bei Betätigung einer Spannschraube des Klemmrings die Hohlwelle auf die Vollwelle aufschrumpft.

Bei einer alternativen Ausgestaltung umfasst der von der Hohlwelle in axialer Richtung überdeckte Bereich den von dem Statorgehäuse überdeckten Bereich,
insbesondere so, dass die Hohlwelle beidseitig in und entgegen der axialen Richtung aus dem Statorgehäuse hervorragt. Von Vorteil ist dabei, dass die Hohlwelle beidseitig hervorragt und somit der Vollwelle ein genügend langer axialer Verbindungsbereich zur Verfügung steht.

Bei einer vorteilhaften Ausgestaltung ist das zweite Tragteil aus Stahl und der Flansch aus Aluminium gefertigt. Von Vorteil ist dabei, dass die Restspannung im Flansch zumindest teilweise aufnehmbar ist.

Bei einer vorteilhaften Ausgestaltung bilden die axial durch das Flanschteil durchgehenden Ausnehmungen zur Aufnahme der Federteile ein quadratisches Bohrbild, insbesondere bei Blickrichtung in axialer Richtung. Von Vorteil ist dabei, dass die Eckbereiche des Flansches nutzbar sind.

**Erfindungsgemäß** ist der Flansch als Pyramidenstumpf mit einer quadratischen Grundfläche ausgeformt,
insbesondere wobei in einem jeweiligen Eckbereich des Quadrats ein jeweiliges Federteil angeordnet ist. Von Vorteil ist dabei, dass die Federteile auf hohem Radialabstand angeordnet sind und somit der Flansch beim Aufnehmen der Restspannung nur geringfügig verformt wird.

Bei einer vorteilhaften Ausgestaltung ist die senkrechte Projektion der Federteile auf eine Ebene, deren Normalenrichtung parallel zur Drehachse der Hohlwelle des Elektromotors ausgerichtet ist, beabstandet von der senkrechten Projektion des Statorgehäuses auf diese Ebene. Von Vorteil ist dabei, dass die durch die Federteile durchgeführten Schraubteile vom Statorgehäuse ungehindert betätigbar sind. Denn die von den Federteilen überdeckten Raumbereiche stehen radial über den vom Statorgehäuse überdeckten Raumbereich hervor.

Bei einer vorteilhaften Ausgestaltung ist ein Umrichter mit dem Statorgehäuse verbunden, wobei die senkrechte Projektion der Federteile auf eine Ebene, deren Normalenrichtung parallel zur Drehachse der Hohlwelle des Elektromotors ausgerichtet ist, beabstandet ist von der senkrechten Projektion des Umrichters auf diese Ebene. Von Vorteil ist dabei, dass die durch die Federteile durchgeführten Schraubteile vom Umrichter ungehindert betätigbar sind. Denn die von den Federteilen überdeckten Raumbereiche stehen radial über den vom Umrichter überdeckten Raumbereich hervor.

Bei einer vorteilhaften Ausgestaltung sind am Flansch Kühlrippen ausgeformt. Von Vorteil ist dabei, dass die vom Elektromotor zum zweiten Tragteil strömende Wärme schon auch während des Durchströmens des Flansches zumindest teilweise über die Kühlrippen an die Umgebung abgebbar ist.

Vorzugsweise erstrecken sich die Kühlrippen axial und sind bezogen auf die Drehachse der Vollwelle in Umfangsrichtung gleichmäßig voneinander beabstandet, wobei allerdings in dem von dem jeweiligen Federteil, insbesondere von dessen Kragen, überdeckten Umfangswinkelbereich keine Kühlrippen angeordnet sind sondern in dem von den Kühlrippen in axialer Richtung überdeckten Bereich der vom Flansch überdeckte Radialabstandsbereich kleiner ist als und/oder beabstandet ist von dem von den Federteilen überdeckten Radialabstandsbereich. Somit ist ein Raumbereich freigehalten von Kühlrippen, der zum Betätigen der Schraubteile verwendbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine erfindungsgemäße Fördervorrichtung, insbesondere Bandfördereinrichtung oder Gurtförderer, mit einem direkt antreibenden Elektromotor schematisch dargestellt.

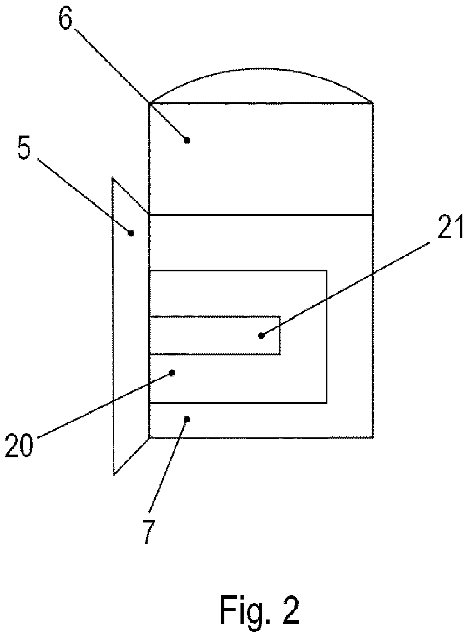

In der Figur 2 ist ein Längsschnitt des Elektromotors schematisch dargestellt.
In der Figur 3 ist eine Draufsicht auf den Elektromotor schematisch dargestellt.

Wie in den Figuren dargestellt, weist die Fördervorrichtung eine Vollwelle 4 auf, welche in einem ersten Tragteil 1 über ein Lager, insbesondere Wälzlager, drehbar gelagert ist.

In einem vom ersten Tragteil 1 beabstandeten, zweiten Tragteil 2 ist ebenfalls ein zweites Lager zur drehbaren Lagerung der Vollwelle 4 angeordnet, wobei die Vollwelle 4 beidseitig dieses zweiten Lagers herausragt.

Auf der vom ersten Tragteil 1 abgewandten Seite des zweiten Tragteils 2 ist der Elektromotor angeordnet.

Hierzu ist ein Flansch 5 des Elektromotors mit dem zweiten Tragteil 2 schraubverbunden.

An der vom zweiten Tragteil 2 abgewandten Seite ist ein Statorgehäuse 7 des Elektromotors mit dem Flansch 5 schraubverbunden.

Ein Rotor 20 ist drehfest an einer Hohlwelle 21 angeordnet und mit ihr verbunden.

Die Hohlwelle 21 ist über zwei im Statorgehäuse 7, insbesondere in zwei mit dem Statorgehäuse 7 verbundenen Lagerflanschen, aufgenommene Lager des Elektromotors drehbar gelagert.

Die Hohlwelle 21 ist drehfest mit der Vollwelle 4 verbunden, insbesondere kraftschlüssig mittels einer Schrumpfschraube.

Bei der Montage des mit dem Flansch 5 versehenen Elektromotors an das zweite Tragteil 2 werden Schraubteile, wie Verbindungsschrauben oder Gewindebolzen mit Schraubmuttern verwendet.

Der Flansch 5 weist axial durchgehende Ausnehmungen auf, durch welche die Schraubteile hindurchragen. Allerdings ist in der jeweiligen Ausnehmung ein jeweiliges Federteil 30 angeordnet, das ringförmig ausgeformt ist. Das jeweilige Schraubteil ist durch ein jeweiliges Federteil 30 durchgeführt. Somit berühren die Schraubteile den Flansch 5 nicht direkt. Zwischen jedem schraubteil ist also ein jeweiliges Federteil 30 angeordnet.

Vorzugsweise sind die Federteile 30 als Gummitülle ausgeführt.

Bei der Montage des mit dem Flansch 5 versehenen Elektromotors an das zweite Tragteil 2 zentrieren die Federteile 30 den Elektromotor. Denn wichtig ist die koaxiale Ausrichtung der Vollwelle 4 zu der Hohlwelle 21. Zuerst wird also die Vollwelle 4 mit der Hohlwelle 21 verbunden und erst danach werden die Schraubteile mit Muttern festgeschraubt. Daher werden die Federteile 30 vor diesem Festschrauben schon verformt, um Toleranzen auszugleichen.

Vorzugsweise weisen die Federteile 30 jeweils einen umlaufenden Kragen in einem ihrer axialen Endbereiche auf, so dass sie nur soweit in die axialen Bohrlöcher einsteckbar sind, bis der jeweilige Kragen anliegt. Somit begrenzt der jeweilige Kragen das jeweilige axiale Einstecken.

Mit dem Statorgehäuse 7 ist ein Umrichter 6 verbunden, so dass der Elektromotor vom Umrichter drehzahlgeregelt oder drehmomentgeregelt betreibbar ist.

Zwischen den beiden Tragteilen 1 und 2 ist eine Rolle 3 mit der Vollwelle 4 drehfest verbunden. Die Rolle 3 treibt vorzugsweise ein Band oder einen Gurt an.

Der vom Flansch 5 überdeckte Radialabstandsbereich umfasst den von der Rolle 3 umfassten Radialabstandsbereich. Vorzugsweise ist er derart radial weiter ausgedehnt, dass die Schraubteile radial außerhalb der Rolle 3 verbindbar sind.

Die axiale Richtung ist dabei parallel zur Drehachse der Vollwelle 4 ausgerichtet.

Die Hohlwelle 21 mit einem Sackloch-artigen Hohlraum ausgeführt. Dies bedeutet, dass der Hohlraum der Hohlwelle 21 nicht durchgehend ausgeführt ist, sondern sacklochartig. Somit weist die Hohlwelle 21 an ihrem vom Flansch 5 abgewandten Endbereich einen Vollwellenbereich auf, der den angrenzenden Hohlwellenbereich verschließt. Somit ist eine erhöhte Schutzart erreichbar. Denn keinerlei Flüssigkeit kann aus dem Hohlraum in den Innenraum des Motors eintreten. Außerdem ist eine axiale Begrenzung für die in den Hohlwellenbereich eingesteckte Vollwelle 4 erreicht.

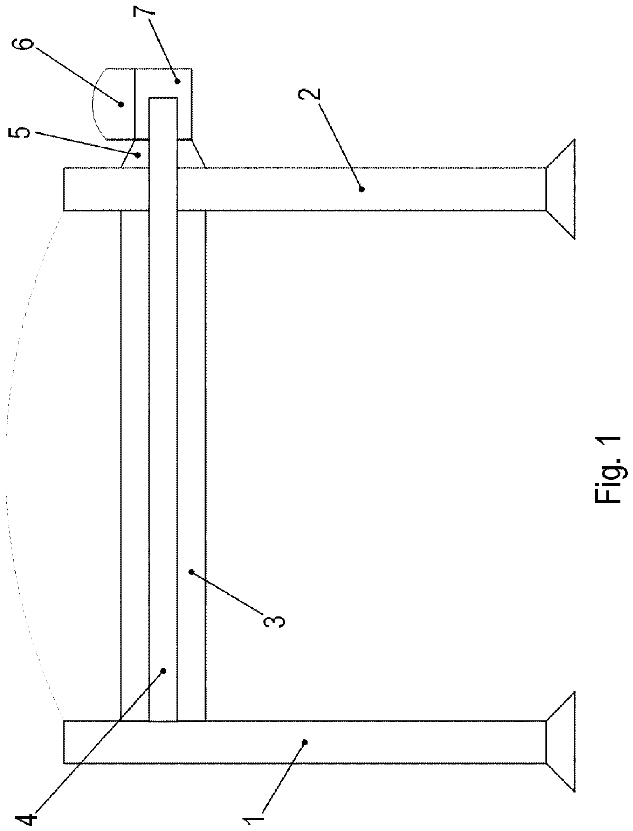

Wie in Figur 1 erkennbar, ist auch die seitliche Ausdehnung des Flansches 5 größer als die Ausdehnung des Umrichters 6 in dieser Richtung. Auf diese Weise sind die Schraubteile durch die durchgehenden Ausnehmungen der Federteile 30 und somit auch durch die die Federteile 30 aufnehmenden Axialbohrungen des Flansches 5 durchführbar. Die Betätigung der Schraubteile 30 ist daher vom Umrichter 6 ungestört und ungehindert ausführbar. Somit ist es vorteilhaft, dass die senkrechte Projektion der Federteile 30 auf eine Ebene, deren Normalenrichtung parallel zur Drehachse der Hohlwelle 21 des Elektromotors ausgerichtet ist, beabstandet ist von der senkrechten Projektion des Umrichters auf diese Ebene, insbesondere und sogar von der senkrechten Projektion des Statorgehäuses auf diese Ebene.

Vorzugsweise wird der Flansch 5 aus einem Material ausgeführt, das weicher ist, also ein höheres Elastizitätsmodul aufweist, als das Material des zweiten Tragteils 2 und härter ist, also ein niedrigeres Elastizitätsmodul aufweist, als die Federteile 30. Außerdem weist das Material bevorzugt eine höhere Wärmeleitfähigkeit auf als Stahl. Somit ist die vom Statorgehäuse 7 in den Flansch 5 fließende Wärme im Flansch 5 aufspreizbar und an das zweite Tragteil 2 weiterleitbar, das somit auch aus Stahl herstellbar ist. Denn der aufgespreizte Wärmestrom ist auch von einem schlechteren Wärmeleiter genügend gut aufnehmbar und an die Umgebung weiterleitbar.

Vorzugsweise weist der Flansch 5 an seiner Außenseite Kühlrippen auf, die in axialer Richtung verlaufen.

Die Hohlwelle 21 ist mittig durch den Flansch axial durchgeführt, ragt also axial beidseitig heraus.

Der Flansch 5 ist dabei pyramidenförmig ausgeformt mit einer quadratischen Grundfläche.

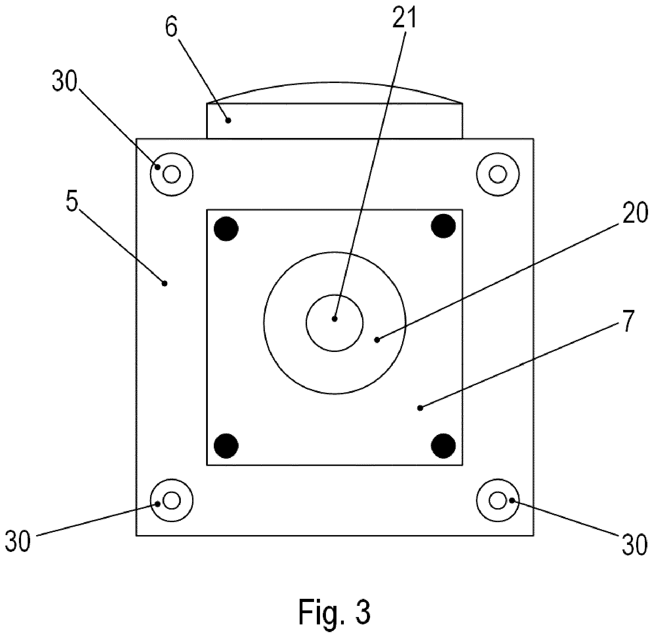

Wie in Figur 3 gezeigt, ist der äußere Umfang der senkrechten Projektion des Flansches 5 in eine Ebene, deren Normale parallel zur axialen Richtung, also parallel zur Drehachse der Hohlwelle 21, ausgerichtet ist, ein Quadrat.

Bei weiteren erfindungsgemäßen Ausführungsbeispielen wird statt des sacklochartigen Hohlraums ein axial durchgehender Hohlraum verwendet. Die Hohlwelle 21 weist dann also einen axial durchgehenden zylindrischen Hohlraum auf, insbesondere wobei die Hohlwelle dann als Hohlzylinder ausgeführt ist. Somit ist eine kostengünstige Ausführung ermöglicht, bei welcher die Einstecktiefe der Vollwelle 4 nicht festgelegt ist.

Bei weiteren erfindungsgemäßen Ausführungsbeispielen ist das axiale Ende der Hohlwelle 21 nicht in dem von dem Rotor 20 überdeckten axialen Bereich angeordnet, sondern der von der Hohlwelle 21 überdeckte axiale Bereich umfasst sogar den gesamten vom Rotor 20 überdeckten axialen Bereich. Insbesondere ragt also die Hohlwelle B-seitig insbesondere und A-seitig aus dem Elektromotor, insbesondere aus dessen Statorgehäuse 7, hervor.

Wärme des Statorgehäuses ist über den Flansch auch ans zweite Tragteil 2 abführbar. Somit ist eine verbesserte Entwärmung des Motors erreichbar.

Bei weiteren erfindungsgemäßen Ausführungsbeispielen wird das im zweiten Tragteil 2 aufgenommen Lager, also das zweite Lager, nicht vorgesehen, sondern die im Elektromotor angeordneten Lager der Hohlwelle 21 übernehmen nach Verbinden der Vollwelle 4 mit der Hohlwelle 21 auch die Lagerung der Vollwelle 4. Somit ist dann die Vollwelle 4 nur über das erste Lager, welches im ersten Tragteil 1 aufgenommen ist, und über die im Statorgehäuse 7 aufgenommenen Lager gelagert. Somit sind Verluste reduzierbar und insbesondere der Wärmeeintrag in das zweite Tragteil 2.

### Bezugszeichenliste

1 Tragteil
2 Tragteil
3 Rolle
4 Vollwelle
5 Flansch
6 Umrichter
7 Statorgehäuse
20 Rotor
21 Hohlwelle
30 Federteil, insbesondere Gummitülle

## Patentansprüche

1. Fördervorrichtung mit einem ersten Tragteil (1), einem zweiten Tragteil (2), einem zwischen dem ersten und dem zweiten Tragteil (1, 2) angeordneten Fördermittel, insbesondere Rolle (3) oder Zahnrad, einer mit dem Fördermittel drehfest verbundenen Vollwelle (4) und
einem Elektromotor,
wobei der Elektromotor ein Statorgehäuse (7) und einen Rotor (20) aufweist,
wobei der Rotor (20) drehfest mit einer Hohlwelle (21) verbunden ist, welche relativ zum Statorgehäuse (7) drehbar gelagert ist,
insbesondere wobei die Hohlwelle (21) mittels eines ersten Lagers, das in einem Lagerflansch aufgenommen ist und mit dem Statorgehäuse (7) verbunden ist, und mittels eines zweiten Lagers gelagert ist, das in einem zweiten Lagerflansch aufgenommen ist und mit dem Statorgehäuse (7) auf der von dem ersten Lagerflansch abgewandten Seite des Statorgehäuses (7) verbunden ist,
wobei die Hohlwelle (21) drehfest, insbesondere kraftschlüssig, mit der Vollwelle (4) verbunden ist, welche zumindest teilweise in eine Ausnehmung der Hohlwelle (21) hineinragt,
und wobei die Vollwelle (4) durch eine Ausnehmung des zweiten Tragteils (2) hindurchragt und in einem in dem ersten Tragteil (1) aufgenommenen ersten Lager drehbar gelagert ist,
**dadurch gekennzeichnet, dass**
das Statorgehäuse (7), insbesondere der erste, mit dem Statorgehäuse (7) verbundene Lagerflansch, mit einem Flansch (5) verbunden ist, welcher auf der vom Elektromotor abgewandten Seite mit dem zweiten Tragteil (2) verbunden ist,
dass der Flansch (5) mittels durch Ausnehmungen des Flansches (5) hindurchragender Schraubteile, insbesondere mittels durch Ausnehmungen des Flansches (5) hindurchragende Gewindestangen oder mittels durch Ausnehmungen des Flansches (5) hindurchragende Schraubenköpfe aufweisende Schrauben mit dem zweiten Tragteil (2) verbunden ist,
dass jedes Schraubteil vom Flansch (5) beabstandet ist und das jeweilige Schraubteil durch ein jeweiliges Federteil (30) hindurchragt, das zwischen dem jeweiligen Schraubteil und dem Flansch (5) angeordnet ist,
insbesondere wobei das jeweilige Federteil (30) in eine axial durch den Flansch (5) durchgehende Ausnehmung eingesteckt ist,
und **dass der Flansch (5) als Pyramidenstumpf mit einer quadratischen Grundfläche ausgeformt ist.**

2. Fördervorrichtung nach Anspruch 1, **dadurch gekennzeichnet, dass der** von der Hohlwelle (21) in axialer Richtung überdeckte Bereich den von dem Statorgehäuse (7) überdeckten Bereich **umfasst.**

3. Fördervorrichtung nach Anspruch 1 oder 2,
**dadurch gekennzeichnet, dass**
im ersten Tragteil (1) ein zweites Lager zur drehbaren Lagerung der Vollwelle (4) angeordnet ist.

4. Fördervorrichtung nach einem der vorangegangenen Ansprüche,
**dadurch gekennzeichnet, dass**
das Federteil (30) aus einem elastischen Material, insbesondere aus einem Elastomer und/oder aus Gummi, gefertigt ist und/oder ringförmig ausgebildet ist.

5. Fördervorrichtung nach einem der vorangegangenen Ansprüche,
**dadurch gekennzeichnet, dass**
das Federteil (30) einen in Umfangsrichtung um die Ringachse des ringförmig ausgebildeten Federteils (30) umlaufenden, radial hervorragender Kragen aufweist, insbesondere radial am Federteil (30) hervorragenden Kragen.

6. Fördervorrichtung nach Anspruch 5
**dadurch gekennzeichnet, dass**
der Kragen das Federteil (30) in axialer Richtung am Flansch (5) begrenzt.

7. Fördervorrichtung nach einem der vorangegangenen Ansprüche,
**dadurch gekennzeichnet, dass**
der Flansch (5) aus einem Material, einstückig und/oder einteilig, hergestellt ist, dessen Elastizitätsmodul größer ist als das Elastizitätsmodul des zweiten Tragteils (2).

8. Fördervorrichtung nach einem der vorangegangenen Ansprüche,
**dadurch gekennzeichnet, dass**
die Hohlwelle (21) eine mittig angeordnete, sacklochartig ausgeführte Ausnehmung aufweist oder eine axial durch die Hohlwelle (21) durchgehende Bohrung aufweist.

9. Fördervorrichtung nach Anspruch 2, **dadurch gekennzeichnet, dass** die Hohlwelle (21) beidseitig in und entgegen der axialen Richtung aus dem Statorgehäuse (7) hervorragt.

10. Fördervorrichtung nach einem der vorangegangenen Ansprüche,
**dadurch gekennzeichnet, dass**
das zweite Tragteil (2) aus Stahl und der Flansch (5) aus Aluminium gefertigt ist.

11. Fördervorrichtung nach einem der vorangegangenen Ansprüche,
**dadurch gekennzeichnet, dass**
die axial durch den Flansch (5) durchgehenden Ausnehmungen zur Aufnahme der Federteile (30) bilden ein quadratischen Bohrbild, insbesondere bei Blickrichtung in axialer Richtung.

12. Fördervorrichtung nach einem der vorangegangenen Ansprüche,
**dadurch gekennzeichnet, dass**
**in einem jeweiligen Eckbereich des Quadrats ein jeweiliges Federteil (30) angeordnet ist.**

13. Fördervorrichtung nach einem der vorangegangenen Ansprüche,
**dadurch gekennzeichnet, dass**
die senkrechte Projektion der Federteile (30) auf eine Ebene, deren Normalenrichtung parallel zur Drehachse der Hohlwelle (21) des Elektromotors ausgerichtet ist, beabstandet ist von der senkrechten Projektion des Statorgehäuses (7) auf diese Ebene.

14. Fördervorrichtung nach einem der vorangegangenen Ansprüche,
**dadurch gekennzeichnet, dass**
ein Umrichter (6) mit dem Statorgehäuse (7) verbunden ist,
wobei die senkrechte Projektion der Federteile (30) auf eine Ebene, deren Normalenrichtung parallel zur Drehachse der Hohlwelle (21) des Elektromotors ausgerichtet ist, beabstandet ist von der senkrechten Projektion des Umrichters (6) auf diese Ebene.

15. Fördervorrichtung nach einem der vorangegangenen Ansprüche,
**dadurch gekennzeichnet, dass**
am Flansch (5) Kühlrippen ausgeformt sind,
und/oder dass
der Rotor (20) des Elektromotors mit Dauermagneten bestückt ist
und/oder dass
der Elektromotor ein Synchronmotor ist,
und/oder dass
sich die Kühlrippen des Flansches (5) axial erstrecken und bezogen auf die Drehachse der Vollwelle (4) in Umfangsrichtung gleichmäßig voneinander beabstandet sind,
insbesondere wobei allerdings in dem von dem jeweiligen Federteil (30), insbesondere von dessen Kragen, überdeckten Umfangswinkelbereich keine Kühlrippen angeordnet sind sondern in dem von den Kühlrippen in axialer Richtung überdeckten Bereich der vom Flansch (5) überdeckte Radialabstandsbereich kleiner ist als und/oder beabstandet ist von dem von den Federteil (30)en überdeckten Radialabstandsbereich.

## Claims

1. A conveyor having a first supporting part (1), a second supporting part (2), a conveying means, in particular roller (3) or toothed wheel, arranged between the first and the second supporting part (1, 2), a solid shaft (4), connected in a rotationally-fixed manner to the conveying means, and an electric motor,
wherein the electric motor has a stator housing (7) and a rotor (20),
wherein the rotor (20) is connected in a rotationally-fixed manner to a hollow shaft (21) which is rotatably mounted relative to the stator housing (7),
in particular wherein the hollow shaft (21) is mounted by means of a first bearing, received in a bearing flange and connected to the stator housing (7), and by means of a second bearing, received in a second bearing flange and connected to the stator housing (7) at that side of the stator housing (7) remote from the first bearing flange, wherein the hollow shaft (21) is connected in a rotationally-fixed, in particular force-locked, manner to the solid shaft (4) which projects at least partially into a cutout of the hollow shaft (21),
and wherein the solid shaft (4) projects through a cutout of the second supporting part (2) and is rotatably mounted in a first bearing received in the first supporting part (1), **characterised**
**in that** the stator housing (7), in particular the first bearing flange connected to the stator housing (7), is connected to a flange (5) which at that side remote from the electric motor is connected to the second supporting part (2),
**in that** the flange (5) is connected to the second supporting part (2) by means of screw parts projecting through cutouts of the flange (5), in particular by means of threaded rods projecting through cutouts of the flange (5) or by means of screws, with screw heads, projecting through cutouts of the flange (5),
**in that** each screw part is spaced apart from the flange (5) and the respective screw part projects through a respective spring part (30) arranged between the respective screw part and the flange (5),
in particular wherein the respective spring part (30) is inserted into a cutout axially passing through the flange (5),
and **in that** the flange (5) is in the form of a truncated pyramid with a square base.

2. A conveyor according to claim 1,
**characterised in that**
the region covered by the hollow shaft (21) in an axial direction comprises the region covered by the stator housing (7).

3. A conveyor according to claim 1 or 2,
**characterised in that**
a second bearing for rotatable mounting of the solid shaft (4) is arranged in the first supporting part (1).

4. A conveyor according to any one of the preceding claims,
**characterised in that**
the spring part (30) is formed from an elastic material, in particular from an elastomer and/or from rubber, and/or is ring-shaped.

5. A conveyor according to any one of the preceding claims,
**characterised in that**
the spring part (30) has a radially-projecting collar encircling the ring axis of the ring-shaped spring part (30) in a circumferential direction, in particular a collar projecting radially at the spring part (30).

6. A conveyor according to claim 5,
**characterised in that**
the collar restricts the spring part (30) in an axial direction at the flange (5).

7. A conveyor according to any one of the preceding claims,
**characterised in that**
the flange (5) is manufactured in one piece and/or integrally from a material whose modulus of elasticity is greater than the modulus of elasticity of the second supporting part (2).

8. A conveyor according to any one of the preceding claims,
**characterised in that**
the hollow shaft (21) has a centrally arranged, blind-bore-like cutout or has a bore which passes axially through the hollow shaft (21).

9. A conveyor according to claim 2,
**characterised in that**
the hollow shaft (21) projects from the stator housing (7) on both sides in the axial direction and counter thereto.

10. A conveyor according to any one of the preceding claims,
**characterised in that**
the second supporting part (2) is manufactured from steel and the flange (5) from aluminium.

11. A conveyor according to any one of the preceding claims,
**characterised in that**
the cutouts, passing axially through the flange (5), for receiving the spring parts (30) form a square bore pattern, in particular when viewed in an axial direction.

12. A conveyor according to any one of the preceding claims,
**characterised in that**
a respective spring part (30) is arranged in a respective corner region of the square.

13. A conveyor according to any one of the preceding claims,
**characterised in that**
the perpendicular projection of the spring parts (30) onto a plane, whose normal direction is oriented parallel to the rotational axis of the hollow shaft (21) of the electric motor, is spaced apart from the perpendicular projection of the stator housing (7) onto this plane.

14. A conveyor according to any one of the preceding claims,
**characterised in that**
a converter (6) is connected to the stator housing (7),
wherein the perpendicular projection of the spring parts (30) onto a plane, whose normal direction is oriented parallel to the rotational axis of the hollow shaft (21) of the electric motor, is spaced apart from the perpendicular projection of the converter (6) onto this plane.

15. A conveyor according to any one of the preceding claims,
**characterised in that**
cooling ribs are formed on the flange (5),
and/or **in that**
the rotor (20) of the electric motor is provided with permanent magnets
and/or **in that**
the electric motor is a synchronous motor,
and/or **in that**
the cooling ribs of the flange (5) extend axially and are uniformly spaced apart from one another in a circumferential direction related to the rotational axis of the solid shaft (4), in particular wherein however no cooling ribs are arranged in the circumferential angular region covered by the respective spring part (30), in particular by its collar, yet in the region covered in an axial region by the cooling ribs, the radial distance region covered by the flange (5) is smaller than and/or is spaced apart from the radial distance region covered by the spring part(s) (30).

## Revendications

1. Dispositif de transport comprenant une première partie de support (1), une deuxième partie de support (2), un moyen de transport disposé entre la première et la deuxième partie de support (1, 2), en particulier un rouleau (3) ou une roue dentée, un arbre plein (4) relié de manière solidaire en rotation au moyen de transport et un moteur électrique,
dans lequel le moteur électrique présente un boîtier de stator (7) et un rotor (20),
dans lequel le rotor (20) est relié de manière solidaire en rotation à un arbre creux (21) qui est monté rotatif par rapport au boîtier de stator (7),
en particulier dans lequel l'arbre creux (21) est monté au moyen d'un premier palier qui est reçu dans une bride de palier et qui est relié au boîtier de stator (7), et au moyen d'un deuxième palier qui est reçu dans une deuxième bride de palier et qui est relié au boîtier de stator (7) sur le côté du boîtier de stator (7) opposé à la première bride de palier,
dans lequel l'arbre creux (21) est relié de manière solidaire en rotation, en particulier par adhérence, à l'arbre plein (4) qui pénètre au moins partiellement dans un évidement de l'arbre creux (21),
et dans lequel l'arbre plein (4) fait saillie à travers un évidement de la deuxième partie de support (2) et est monté rotatif dans un premier palier reçu dans la première partie de support (1),
**caractérisé en ce**
**que** le boîtier de stator (7), en particulier la première bride de palier reliée au boîtier de stator (7), est relié à une bride (5) qui est reliée à la deuxième partie de support (2) sur le côté opposé au moteur électrique,
**que** la bride (5) est reliée à la deuxième partie de support (2) au moyen de pièces filetées faisant saillie à travers des évidements de la bride (5), en particulier au moyen de tiges filetées faisant saillie à travers des évidements de la bride (5) ou au moyen de vis présentant des têtes de vis faisant saillie à travers des évidements de la bride (5),
**que** chaque pièce filetée est espacée de la bride (5) et la pièce filetée respective fait saillie à travers une pièce faisant ressort respective (30) qui est disposée entre la pièce filetée respective et la bride (5),
en particulier dans lequel la pièce faisant ressort respective (30) est enfichée dans un évidement traversant axialement la bride (5),
et **que** la bride (5) est formée comme une pyramide tronquée avec une surface de base carrée.

2. Dispositif de transport selon la revendication 1,
**caractérisé en ce**
**que** la zone couverte par l'arbre creux (21) dans la direction axiale comprend la zone couverte par le boîtier de stator (7).

3. Dispositif de transport selon la revendication 1 ou la revendication 2,
**caractérisé en ce**
**qu'**un deuxième palier est disposé dans la première partie de support (1) pour le montage rotatif de l'arbre plein (4).

4. Dispositif de transport selon l'une des revendications précédentes,
**caractérisé en ce**
**que** la pièce faisant ressort (30) est fabriquée dans un matériau élastique, en particulier un élastomère et/ou en caoutchouc, et/ou est de forme annulaire.

5. Dispositif de transport selon l'une des revendications précédentes,
**caractérisé en ce**
**que** la pièce faisant ressort (30) présente une collerette s'étendant dans la direction périphérique autour de l'axe d'anneau de la pièce faisant ressort (30) de forme annulaire et faisant saillie radialement, en particulier faisant saillie radialement sur la pièce faisant ressort (30).

6. Dispositif de transport selon la revendication 5,
**caractérisé en ce**
**que** la collerette délimite la pièce faisant ressort (30) dans la direction axiale sur la bride (5).

7. Dispositif de transport selon l'une des revendications précédentes,
**caractérisé en ce**
**que** la bride (5) est réalisée en une seule pièce et/ou une seule partie dans un matériau dont le module d'élasticité est supérieur au module d'élasticité de la deuxième partie de support (2).

8. Dispositif de transport selon l'une des revendications précédentes,
**caractérisé en ce**
**que** l'arbre creux (21) présente un évidement disposé centralement, réalisé à la manière d'un trou borgne, ou présente un alésage traversant axialement l'arbre creux (21).

9. Dispositif de transport selon la revendication 2,
**caractérisé en ce**
**que** l'arbre creux (21) fait saillie des deux côtés du boîtier de stator (7) dans la direction axiale et dans la direction opposée.

10. Dispositif de transport selon l'une des revendications précédentes,
**caractérisé en ce**
**que** la deuxième partie de support (2) est fabriquée en acier et la bride (5) en aluminium.

11. Dispositif de transport selon l'une des revendications précédentes,
**caractérisé en ce**
**que** les évidements traversant axialement la bride (5) pour recevoir les pièces faisant ressort (30) forment un schéma de perçage carré, en particulier en regardant dans la direction axiale.

12. Dispositif de transport selon l'une des revendications précédentes,
**caractérisé en ce**
**qu'**une pièce faisant ressort (30) respective est disposée dans un coin respectif du carré.

13. Dispositif de transport selon l'une des revendications précédentes,
**caractérisé en ce**
**que** la projection verticale des pièces faisant ressort (30) sur un plan dont la direction normale est orientée parallèlement à l'axe de rotation de l'arbre creux (21) du moteur électrique est espacée de la projection verticale du boîtier de stator (7) sur ce plan.

14. Dispositif de transport selon l'une des revendications précédentes,
**caractérisé en ce**
**qu'**un variateur (6) est relié au boîtier de stator (7),
dans lequel la projection verticale des pièces faisant ressort (30) sur un plan dont la direction normale est orientée parallèlement à l'axe de rotation de l'arbre creux (21) du moteur électrique est espacée de la projection verticale du variateur (6) sur ce plan.

15. Dispositif de transport selon l'une des revendications précédentes,
**caractérisé en ce**
**que** des ailettes de refroidissement sont formées sur la bride (5),
et/ou que
le rotor (20) du moteur électrique est équipé d'aimants permanents,
et/ou que
le moteur électrique est un moteur synchrone,
et/ou que
les ailettes de refroidissement de la bride (5) s'étendent axialement et sont régulièrement espacées les unes des autres dans la direction périphérique par rapport à l'axe de rotation de l'arbre plein (4),
en particulier dans lequel aucune ailette de refroidissement n'est toutefois disposée dans la zone angulaire périphérique couverte par la pièce faisant ressort (30) respective, en particulier par sa collerette, mais, dans la zone couverte par les ailettes de refroidissement dans la direction axiale, la zone de distance radiale couverte par la bride (5) est plus petite que la zone de distance radiale couverte par les pièces faisant ressort (30) et/ou est espacée de celle-ci.
